# EUROPEAN PATENT APPLICATION

(11) **EP 4 734 249 A1**
(43) Date of publication of application: **29.04.2026**
(21) Application number: 24859450.9
(22) Date of filing: 13.08.2024
(51) Int. Cl.: H01M 50/197, H01G 11/80, H01M 10/04, H01M 10/052, H01M 10/0565, H01M 10/0566, H01M 10/0585, H01M 50/103, H01M 50/121, H01M 50/184, H01M 50/193

(54) **POWER STORAGE MODULE**

(30) Priority: 01.09.2023 JP 2023142123
(71) Applicant: KABUSHIKI KAISHA TOYOTA JIDOSHOKKI, Kariya-shi, Aichi 448-8671 (JP)
(72) Inventor: SAEKI Yuya, Kariya-shi, Aichi 448-8671 (JP); YAMADA Masahiro, Kariya-shi, Aichi 448-8671 (JP); NAKAMURA Tomohiro, Kariya-shi, Aichi 448-8671 (JP); SHINTANI Kodai, Toyota-shi, Aichi 471-8571 (JP); HIROSE Takayuki, Kariya-shi, Aichi 448-8671 (JP); NATSUI Keisuke, Kariya-shi, Aichi 448-8671 (JP); MATSUURA Kyohei, Kariya-shi, Aichi 448-8671 (JP)
(74) Representative: TBK
(86) International application number: PCT/JP2024/028900
(87) International publication number: WO 2025/047414

(57) **Abstract**

A power storage module 11 includes an electrode laminate 12 and a sealing portion 13 made of resin. The sealing portion 13 includes a plurality of sealing layers 30 each including a first region R1 welded to a peripheral portion 21c of a current collector 21 and a second region R2 extending beyond an outer edge 21d of the current collector 21, and a spacer layer 33 provided between the sealing layers 30 adjacent in a lamination direction. The plurality of sealing layers 30 include first sealing layers 31 provided respectively on a second surface 21b of a positive terminal electrode 16 and on a first surface 21a of a negative terminal electrode 17. The first sealing layers 31 each includes a first resin layer 41, a gas barrier resin layer 42, and a second resin layer 43. Outer edge portions of the plurality of sealing layers 30 including a pair of the first sealing layers 31 and an outer edge portion of the spacer layer 33 are integrated with each other by welding to form an end surface welded portion 34. The gas barrier resin layer 42 is provided to overlap with at least the second region R2.

## Description

### Technical Field

The present disclosure relates to a power storage module.

### Background Art

Patent Literature 1 discloses a bipolar battery. This bipolar battery is formed by laminating bipolar electrode plates in which a conductive plate is provided with an anode active material coating layer on one side and a cathode active material coating layer on the other side. An electrically insulating frame is adhered to the peripheral portion of the conductive plate.

### Citation List

### Patent Literature

[Patent Literature 1] Japanese Patent No. 2623311

### Summary of Invention

### Technical Problem

In the battery (power storage module) disclosed in Patent Literature 1, the electrically insulating frame (sealing layer) is provided so as to extend beyond the outer edge of the conductive plate. The sealing layer extending beyond the outer edge of the conductive plate in this way may form a resin sealing portion that seals an internal space between electrodes. It is known that a gas having a small molecular diameter is capable of passing back and forth through gaps between the molecular bonds of a resin having large spacings between molecular chains. Consequently, in a large battery, air may enter the cell via the thin sealing layer disposed at the ends of the laminate exposed to the air, or the electrolyte solution inside the cell may leak out.

It is an object of the present disclosure to provide a power storage module that is capable of suppressing the gas permeation of a sealing portion.

### Solution to Problem

A power storage module according to an aspect of the present disclosure includes: a laminate in which a plurality of electrodes each having a current collector are laminated; and a sealing portion made of resin provided on a peripheral portion of each current collector to surround the laminate when viewed in a lamination direction of the plurality of electrodes. The plurality of electrodes include a pair of terminal electrodes and a bipolar electrode disposed between the pair of terminal electrodes in the lamination direction. In each of the pair of terminal electrodes, the current collector has an inner surface facing the bipolar electrode and an outer surface facing away from the inner surface. The sealing portion includes: a plurality of sealing layers each including a first region welded to the peripheral portion of the current collector and a second region extending beyond an outer edge of the current collector; and a spacer layer provided between the sealing layers adjacent in the lamination direction. The plurality of sealing layers include a first sealing layer provided on the outer surface. The first sealing layer includes: a first resin layer welded to the outer surface; a gas barrier resin layer provided on the first resin layer and having a lower gas permeability than the first resin layer; and a second resin layer provided on the gas barrier resin layer and sandwiching the gas barrier resin layer with the first resin layer. Outer edge portions of the plurality of sealing layers including a pair of the first sealing layers and an outer edge portion of the spacer layer are integrated with each other by welding to form an end surface welded portion at least on an end surface of the second region when viewed in the lamination direction. The gas barrier resin layer is provided to overlap with at least the second region when viewed in the lamination direction.

In the above power storage module, the first sealing layer which is the outermost sealing layer includes the gas barrier resin layer having a low gas permeability. Thus, the gas permeation of the sealing portion can be suppressed.

The first sealing layer may be formed by joining a plurality of sheet materials and may include a joint portion joined by the first resin layers and the second resin layers of two of the sheet materials overlapping and welding together. In the joint portion, the first resin layers and the second resin layers may be formed of a polyolefin resin.

The first resin layer may be a polyolefin resin, and the plurality of sealing layers may further include a second sealing layer provided on the inner surface. The second sealing layer may be formed of a polyolefin resin and may include a third resin layer welded to the inner surface. The sealing portion may further include an outer edge welded portion in which the first resin layer and the third resin layer are integrated with each other by welding to cover the outer edge of the current collector.

The outer edge welded portion may be disposed spaced apart from the end surface welded portion when viewed in the lamination direction. The gas barrier resin layer may be provided at least between the outer edge welded portion and the end surface welded portion when viewed in the lamination direction.

The second sealing layer may further include a core resin layer provided on the third resin layer and having a higher crystallinity than the third resin layer.

### Advantageous Effects of Invention

The present disclosure is capable of providing a power storage module that is capable of suppressing the gas permeation of a sealing portion.

### Brief Description of Drawings

FIG. 1 is a schematic plan view illustrating a power storage module according to a first embodiment.
FIG. 2 is a cross-sectional view taken along line II-II in FIG. 1.
FIG. 3 is an enlarged cross-sectional view illustrating a portion of FIG. 2.
FIG. 4 is a cross-sectional view for describing a method for forming an outer edge welded portion.
FIG. 5 is an enlarged cross-sectional view illustrating a portion of a power storage module according to a second embodiment.
FIG. 6 is an enlarged cross-sectional view illustrating a portion of a power storage module according to a third embodiment.
FIG. 7 is a plan view illustrating a first sealing layer according to a variation.

### Description of Embodiments

Embodiments of the present disclosure will be described in detail below with reference to the accompanying drawings. Same reference signs are given to the same or equivalent elements in the description of the drawings, and redundant description will be omitted. In the following description, a rectangular coordinate system defined by X-, Y-, and Z-axes may be referred to.

### (First Embodiment)

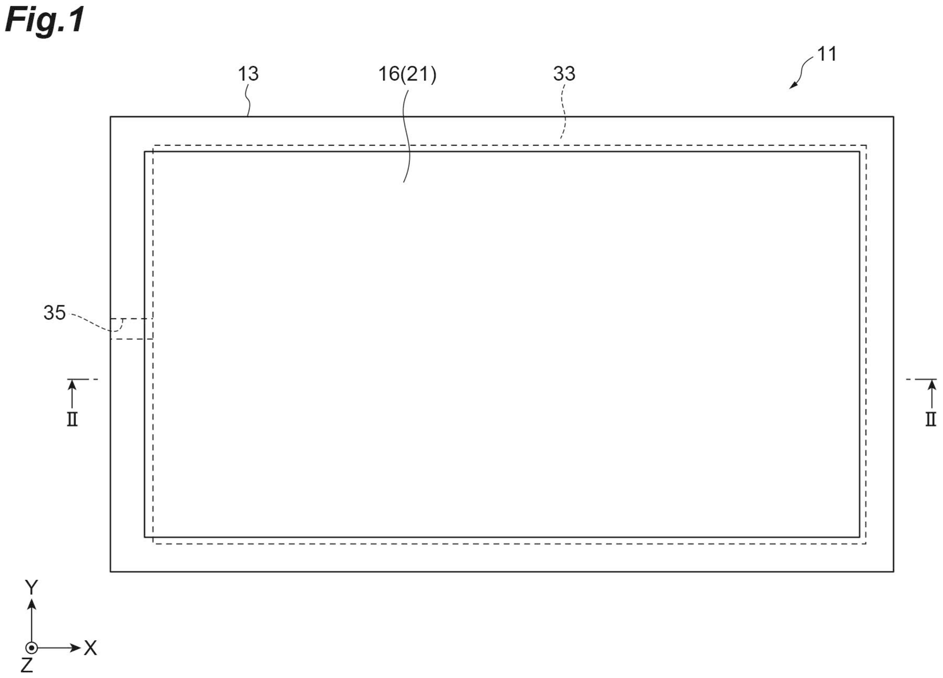

FIG. 1 is a schematic plan view illustrating a power storage module according to a first embodiment. A power storage module 11 according to the first embodiment illustrated in FIG. 1 may be used as batteries for various types of vehicles such as forklifts, hybrid vehicles, and electric vehicles. The power storage module 11 is a secondary battery such as a nickel-hydrogen secondary battery or a lithium-ion secondary battery. The power storage module 11 may be an electric double layer capacitor or a solid-state battery. In the present embodiment, a bipolar lithium-ion secondary battery is exemplified as the power storage module 11.

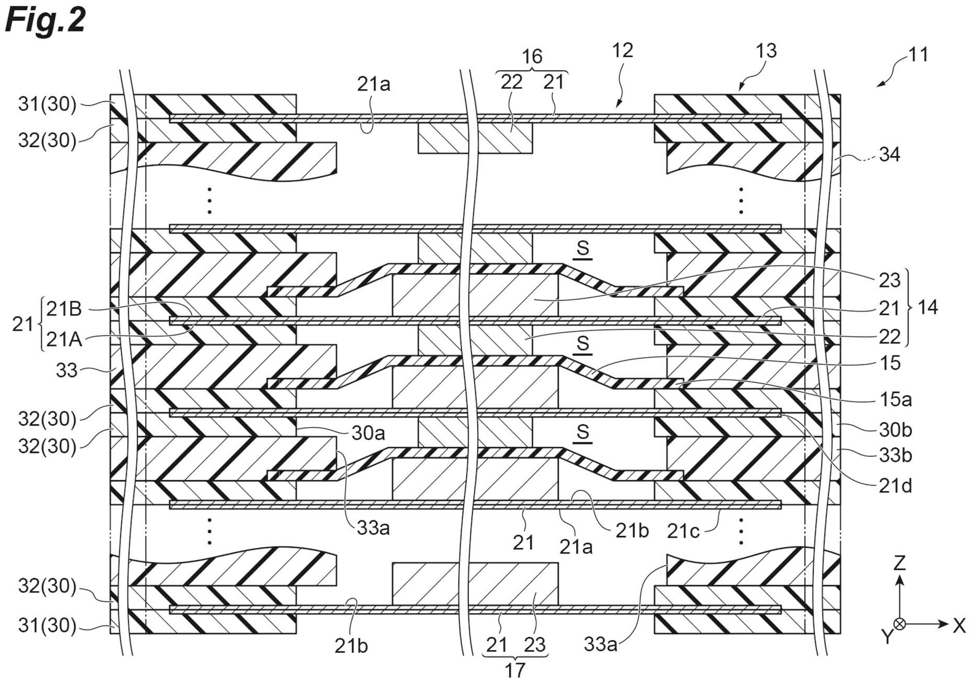

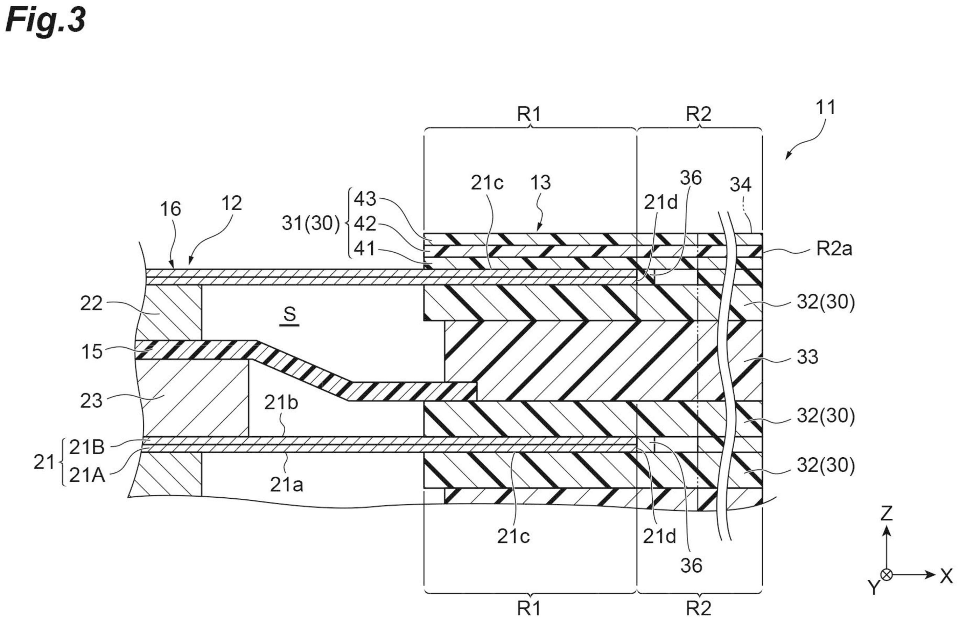

FIG. 2 is a cross-sectional view taken along line II-II in FIG. 1 and schematically illustrates a layer configuration of the power storage module 11. FIG. 3 is an enlarged cross-sectional view illustrating a portion of FIG. 2. The power storage module 11 illustrated in FIGS. 1 to 3 is a single battery having a rectangular parallelepiped shape flat in the Z-axis direction. The power storage module 11 has, for example, a length (length in the X-axis direction) of 100 cm or more and a width (length in the Y-axis direction) of 100 cm or more. For example, the length is 150 cm and the width is 120 cm.

The power storage module 11 is configured to include an electrode laminate (laminate) 12 and a resin sealing portion 13. The electrode laminate 12 is formed by a plurality of electrodes each having a current collector 21 being laminated. A lamination direction of the plurality of electrodes is along the Z-axis and coincides with a lamination direction of the power storage modules 11 in a module laminate formed by the power storage modules 11 being laminated. The plurality of electrodes include a plurality of bipolar electrodes 14, and a pair of terminal electrodes, which includes a positive terminal electrode 16 and a negative terminal electrode 17.

The plurality of bipolar electrodes 14 are disposed between the positive terminal electrode 16 and the negative terminal electrode 17 in the lamination direction. The bipolar electrodes 14 each includes the current collector 21, a positive active material layer 22, and a negative active material layer 23. The current collector 21 is a chemically inactive electrical conductor for continuously supplying current to the positive active material layer 22 and the negative active material layer 23 during discharging or charging of the lithium-ion secondary battery.

The current collector 21 is a sheet-like conductive member having a rectangular shape in a plan view. The current collector 21 has a first surface 21a and a second surface 21b positioned on an opposite side from the first surface 21a. The current collector 21 is made of metal, and is formed, for example, of a metal foil or an alloy foil. Examples of the metal foil include a copper foil, an aluminum foil, a titanium foil, and a nickel foil. Examples of the alloy foil include a stainless steel foil (e.g., SUS304, SUS316, SUS301, etc., as defined in JIS G 4305:2015) and a steel foil or a stainless steel foil subjected to a plating treatment. The alloy foil may be an alloy foil of the metals exemplified as the materials of the above metal foil. The current collector 21 may be formed by a plurality of metal foils being integrated or laminated and bonded together, or by plating a different metal layer on the surface of a single metal foil.

The current collector 21 in the illustrated example is formed by an aluminum foil 21A and a copper foil 21B being bonded such that the first surface 21a is an aluminum layer and the second surface 21b is a copper layer. The current collector 21 may, for example, be a clad foil in which the aluminum foil 21A and the copper foil 21B are laminated and roll-bonded. The current collector 21 may be a laminated foil. That is, the current collector 21 may be formed by the aluminum foil 21A and the copper foil 21B being bonded by a conductive adhesive resin (adhesive layer) and integrated such that the first surface 21a is an aluminum layer and the second surface 21b is a copper layer. The current collector 21 may be formed by depositing or plating copper on one side of an aluminum foil such that the first surface 21a is an aluminum layer and the second surface 21b is a copper layer. For the first surface 21a of the current collector 21, an aluminum layer may be subjected to a chromate treatment. Additionally, for the second surface 21b of the current collector 21, a copper layer may be subjected to nickel plating. In this case, the nickel-plated layer may be a roughened surface which is a protruding plated surface provided with fine projections on its surface. The roughened surface need only be rougher than the surface of an unprocessed metal foil, and may, for example, be formed by roughening, such as etching or electrolytic plating. For example, the current collector 21 may have a thickness of about 30 µm to 150 µm, but is not limited thereto.

The positive active material layer 22 is provided on the first surface 21a of the current collector 21. The current collector 21 and the positive active material layer 22 provided on the first surface 21a of the current collector 21 form a positive electrode of the bipolar electrode 14. The positive active material layer 22 is formed in a rectangular shape at the center of the first surface 21a such that a peripheral portion 21c of the current collector 21 is exposed.

An example of the positive active material layer 22 is provided on the first surface 21a of the current collector 21 via an adhesive layer. For example, the adhesive layer may be formed of an adhesive such as acetylene black. An example of the adhesive layer may be provided over the entire surface of the first surface 21a of the current collector 21. Additionally, the edge of the adhesive layer may be formed along the edge of the negative active material layer 23 that surrounds the positive active material layer 22 when viewed in the lamination direction.

The positive active material layer 22 is a layered member including a positive active material, a conductive additive, and a binder. Examples of the positive active material include composite oxide, metallic lithium, and sulfur. The composition of the composite oxide includes, for example, at least one of manganese, titanium, nickel, cobalt, and aluminum, and lithium. Examples of the composite oxide include olivine-type lithium iron phosphate (LiFePO₄), LiCoO₂, and LiNiMnCoO₂.

The binder binds the active material or the conductive additive to the surface of the current collector 21 and serves to maintain a conductive network in the electrode. Examples of the binder include fluororesins such as polyvinylidene fluoride, polytetrafluoroethylene, and fluororubber, thermoplastic resins such as polypropylene and polyethylene, imide resins such as polyimide and polyamidimide, alkoxysilyl group-containing resins, acrylic resins including a monomer unit such as acrylic acid and methacrylic acid, styrene-butadiene rubber (SBR), carboxymethyl cellulose, alginate such as sodium alginate and ammonium alginate, crosslinked water-soluble cellulose ester, and starch-acrylic acid graft copolymer. These binders may be used alone or in combination. Examples of the conductive additive include acetylene black, carbon black, and graphite. A viscosity-adjusting solvent such as N-methyl-2-pyrrolidone (NMP) may be used for the positive active material layer 22.

The negative active material layer 23 is provided on the second surface 21b of the current collector 21. The current collector 21 and the negative active material layer 23 provided on the second surface 21b of the current collector 21 form a negative electrode of the bipolar electrode 14. The negative active material layer 23 is formed in a rectangular shape at the center of the second surface 21b such that the peripheral portion 21c of the current collector 21 is exposed. In one example, the positive active material layer 22 is located within the region of the negative active material layer 23 when viewed in the lamination direction. That is, the outer edge of the positive active material layer 22 is slightly smaller than the outer edge of the negative active material layer 23.

The negative active material layer 23 is a layered member including a negative active material, a conductive additive, and a binder. Examples of the negative active material include carbons such as graphite, artificial graphite, highly oriented graphite, mesocarbon microbeads, hard carbon, and soft carbon, metal compounds, elements capable of alloying with lithium or compounds thereof, and boron-doped carbon. Examples of the elements capable of alloying with lithium include silicon and tin. As the conductive additive and binder, the same as those used for the positive active material layer 22 may be used.

To form the positive active material layer 22 and the negative active material layer 23 on the current collector 21, a conventionally known method such as a roll coating method, a die coating method, a dip coating method, a doctor blade method, a spray coating method, or a curtain coating method is used. Specifically, an active material, a solvent, and, if necessary, a binder and a conductive additive are mixed to prepare a slurry composition for forming an active material layer, which is then applied on the first surface 21a and the second surface 21b and dried. The solvent is, for example, N-methyl-2-pyrrolidone, methanol, methyl isobutyl ketone, or water. The dried product may be compressed to increase the electrode density.

In the electrode laminate 12, the bipolar electrodes 14, 14 adjacent in the lamination direction are disposed such that the positive active material layer 22 of one bipolar electrode 14 faces the negative active material layer 23 of the other bipolar electrode 14. A separator 15 is disposed between the bipolar electrodes 14, 14 adjacent in the lamination direction. In the present embodiment, the separator 15 is a sheet-like member having a rectangular shape in a plan view, and prevents short-circuiting between the bipolar electrodes 14, 14 adjacent in the lamination direction.

The separator 15 has a rectangular shape greater than the positive active material layer 22 and the negative active material layer 23 and smaller than the current collector 21 when viewed in the lamination direction. An end portion 15a of the separator 15 is positioned outside the positive active material layer 22 and the negative active material layer 23 when viewed in the lamination direction. That is, the end portion 15a of the separator 15 does not overlap with either the positive active material layer 22 or the negative active material layer 23 when viewed in the lamination direction.

The separator 15 is, for example, formed in a sheet shape. The separator 15 is, for example, a porous sheet or nonwoven fabric containing a polymer that absorbs and retains an electrolyte. Examples of the material that forms the separator 15 include polyolefins such as polypropylene and polyethylene, and polyesters. The separator 15 may have a single layer structure or a multilayer structure. If it has a multilayer structure, the separator 15 may, for example, include a substrate layer and a pair of adhesive layers, and be adhered and fixed to the positive active material layer 22 and the negative active material layer 23 by the pair of adhesive layers. The separator 15 may include a ceramic layer to be a heat-resistant layer. The separator 15 may be reinforced with a polyvinylidene fluoride resin compound.

The separator 15 is formed by stretching molten resin by a dry or wet process. In this case, the separator 15 has a direction of large shrinkage and a direction of small shrinkage depending on the stretching process. The separator 15 may have a rectangular shape in which the direction of large shrinkage is along the short side and the direction of small shrinkage is along the long side. An example of the separator 15 is formed by the wet process, with a transverse direction (TD) of large shrinkage being along the short side, and a machine direction (MD) of small shrinkage being along the long side.

Examples of the electrolyte impregnated into the separator 15 include a liquid electrolyte (electrolyte solution) containing a non-aqueous solvent and an electrolyte salt dissolved in the non-aqueous solvent, or a polymer gel electrolyte containing an electrolyte retained within a polymer matrix. In the case where an electrolyte is impregnated into the separator 15, publicly known lithium salts such as LiClO₄, LiAsF₆, LiPF₆, LiBF₄, LiCF₃SO₃, LiN(FSO₂)₂, LiFSi, or LiN(CF₃SO₂)₂ can be used as its electrolyte salt. Additionally, publicly known solvents such as cyclic carbonates, cyclic esters, linear carbonates, linear esters, or ethers can be used as the non-aqueous solvent. Two or more of these publicly known solvent materials may be combined and used.

The positive terminal electrode 16 is composed of the current collector 21 and the positive active material layer 22 provided on the first surface 21a of the current collector 21. The positive terminal electrode 16 is disposed on one end side of the electrode laminate 12 in the lamination direction so that the positive active material layer 22 of the first surface 21a faces the negative active material layer 23 of the bipolar electrode 14 at the end. In the positive terminal electrode 16, the second surface 21b of the current collector 21 is not provided with the positive active material layer 22 and the negative active material layer 23, and the second surface 21b is electrically connected to an adjacent conductive plate (not shown). The current collector 21 used for the positive terminal electrode 16 may be formed of an aluminum foil.

The negative terminal electrode 17 is composed of the current collector 21 and the negative active material layer 23 provided on the second surface 21b of the current collector 21. The negative terminal electrode 17 is disposed on the other end side of the electrode laminate 12 in the lamination direction so that the negative active material layer 23 of the second surface 21b faces the positive active material layer 22 of the bipolar electrode 14 at the end. In the negative terminal electrode 17, the first surface 21a of the current collector 21 is not provided with the positive active material layer 22 and the negative active material layer 23, and the first surface 21a is electrically connected to an adjacent conductive plate (not shown). The current collector 21 used for the negative terminal electrode 17 may be formed of a copper foil or a composite material including a copper layer.

In each of the pair of terminal electrodes, the current collector 21 has an inner surface facing the bipolar electrode 14 side and an outer surface facing away from the inner surface. That is, in the positive terminal electrode 16, the inner surface of the current collector 21 is the first surface 21a and the outer surface of the current collector 21 is the second surface 21b. On the other hand, in the negative terminal electrode 17, the inner surface of the current collector 21 is the second surface 21b and the outer surface of the current collector 21 is the first surface 21a.

The separator 15 described above is disposed between the bipolar electrode 14 and the positive terminal electrode 16 and between the bipolar electrode 14 and the negative terminal electrode 17 as well as between the bipolar electrodes 14, 14 adjacent in the lamination direction. The arrangement of the separator 15 prevents short-circuiting between the bipolar electrode 14 and the positive terminal electrode 16 and between the bipolar electrode 14 and the negative terminal electrode 17.

The sealing portion 13 is a member for sealing an electrolyte solution (not shown) containing an electrolyte in an internal space S between the current collectors 21, 21 adjacent in the lamination direction. The sealing portion 13 has electrical insulation properties. The sealing portion 13 is provided on the peripheral portion 21c of the current collector 21 so as to surround the electrode laminate 12 when viewed in the lamination direction. The sealing portion 13 is adhered (bonded) to the peripheral portion of the current collector 21. The sealing portion 13 is spaced apart from the positive active material layer 22 and the negative active material layer 23 when viewed in the lamination direction. The sealing portion 13 has a frame shape when viewed in the lamination direction, and is disposed between the current collectors 21, 21 adjacent in the lamination direction so as to surround the positive active material layer 22 and the negative active material layer 23. In the power storage module 11, the internal space S is defined by the current collectors 21, 21 adjacent in the lamination direction and the sealing portion 13. An electrolyte solution (not shown) containing an electrolyte is accommodated in the internal space S. The sealing portion 13 is disposed between the current collectors 21, 21 adjacent in the lamination direction to also serve as a spacer for maintaining the distance between the adjacent current collectors 21, 21.

An example of the sealing portion 13 includes a plurality of sealing layers 30, a plurality of spacer layers 33, an end surface welded portion 34, and a plurality of outer edge welded portions 36. The plurality of sealing layers 30 and the plurality of spacer layers 33 each has a rectangular frame shape when viewed in the lamination direction. The sealing layer 30 and the spacer layer 33 may be formed into a rectangular frame shape by punching or cutting a long sheet material fed from a parent roll. The sealing layer 30 and the spacer layer 33 may be formed into a rectangular frame shape by joining a plurality of sheet materials formed into a rectangular shape, an L shape, a U shape, or the like.

The sealing layer 30 may have a thickness (length in the lamination direction) of, for example, 100 µm to 200 µm. The plurality of sealing layers 30 may have the same thickness. The sealing layer 30 adhered to the first surface 21a of the current collector 21 may have a thickness different from a thickness of the sealing layer 30 adhered to the second surface 21b.

Each of the plurality of sealing layers 30 is provided on the peripheral portion 21c of the current collector 21 so as to extend beyond an outer edge 21d of the current collector 21. Each of the plurality of sealing layers 30 has a first region R1 that is welded to the peripheral portion 21c of the current collector 21 and a second region R2 that extends beyond the outer edge 21d of the current collector 21. In the present embodiment, the outer edge 21d of the current collector 21 is formed by the end surface of the current collector 21. The plurality of sealing layers 30 are adhered to both the first surface 21a and the second surface 21b at the peripheral portion 21c of each current collector 21. In one example, an outer edge 30b of the sealing layer 30 is larger than the outer edge 21d of the current collector 21 and surrounds the current collector 21 when viewed in the lamination direction. Additionally, the outer edge 21d of the current collector 21 is larger than an inner edge 30a of the sealing layer 30 and surrounds the inner edge 30a of the sealing layer 30 when viewed in the lamination direction. The sealing layer 30 and the current collector 21 are bonded to each other in a region overlapping each other when viewed in the lamination direction. That is, the sealing layer 30 and the current collector 21 are bonded to each other in a region between the inner edge 30a of the sealing layer 30 and the outer edge 21d of the current collector 21. The inner edge 30a of the sealing layer 30 is spaced apart from the positive active material layer 22 and the negative active material layer 23 when viewed in the lamination direction.

The plurality of sealing layers 30 include a pair of first sealing layers 31 and second sealing layers 32. The pair of first sealing layers 31 are the sealing layers 30 provided on the outer surfaces of the current collectors 21 of the pair of terminal electrodes. That is, one of the first sealing layers 31 is adhered to the second surface 21b of the positive terminal electrode 16, and the other first sealing layer 31 is adhered to the first surface 21a of the negative terminal electrode 17. The pair of first sealing layers 31 are the outermost sealing layers disposed at respective ends of the laminate among the plurality of sealing layers 30. The second sealing layers 32 are the sealing layers 30 other than the pair of first sealing layers 31, and are disposed between the pair of first sealing layers 31. The second sealing layer 32 is provided on the inner surface of the current collector 21 of each of the pair of terminal electrodes (i.e., on the first surface 21a of the current collector 21 of the positive terminal electrode 16 and on the second surface 21b of the current collector 21 of the negative terminal electrode 17) and on the first surface 21a and the second surface 21b of the current collector 21 of each bipolar electrode 14.

The first sealing layers 31 each has a multilayer structure. The first sealing layer 31 includes a first resin layer 41, a gas barrier resin layer 42, and a second resin layer 43. The first resin layer 41 is welded to the outer surface of the current collector 21 of each of the pair of terminal electrodes (i.e., to the second surface 21b of the positive terminal electrode 16 and to the first surface 21a of the negative terminal electrode 17). The gas barrier resin layer 42 is provided on the first resin layer 41. The second resin layer 43 is provided on the gas barrier resin layer 42 so as to sandwich the gas barrier resin layer 42 with the first resin layer 41. The second resin layer 43 is provided on the gas barrier resin layer 42 and sandwiches the gas barrier resin layer 42 with the first resin layer 41. The first resin layer 41 ensures adhesion between the first sealing layer 31 and the current collector 21, thereby suppressing the delamination of the first sealing layer 31 from the current collector 21. The second resin layer 43 covers the gas barrier resin layer 42 and protects the gas barrier resin layer 42 from damage caused by contact with external members.

The first resin layer 41 and the second resin layer 43 are formed, for example, of the same resin material. The first resin layer 41 and the second resin layer 43 are each a polyolefin or a modified polyolefin and are composed of a resin material having electrolyte resistance such as acid-modified polyethylene (acid-modified PE), acid-modified polypropylene (acid-modified PP), polyethylene, or polypropylene. The resin materials forming the first resin layer 41 and the second resin layer 43 may be different from each other.

The gas barrier resin layer 42 is welded to the first resin layer 41 and the second resin layer 43 so as to overlap the second region R2 when viewed in the lamination direction. The gas barrier resin layer 42 is provided at least from the outer edge welded portion 36 to the end surface welded portion 34 when viewed in the lamination direction. The gas barrier resin layer 42 covers at least the region between the outer edge welded portion 36 and the end surface welded portion 34 when viewed in the lamination direction. The gas barrier resin layer 42 is provided at least between the outer edge welded portion 36 and the end surface welded portion 34 when viewed in the lamination direction. The gas barrier resin layer 42 has a lower gas permeability than the first resin layer 41 and the second resin layer 43. The gas barrier resin layer 42 is formed of a resin material containing vinyl alcohol as a monomer. The gas barrier resin layer 42 is formed, for example, of an ethylene-vinyl alcohol copolymer (EVOH) resin or a polyvinyl alcohol (PVA) resin. The first resin layer 41, the gas barrier resin layer 42, and the second resin layer 43 may have the same thickness or may have different thicknesses.

In the present embodiment, the second sealing layer 32 (third resin layer) has a single layer structure and is composed of one resin layer. The second sealing layer 32 is welded to the inner surface of the current collector 21 of each of the pair of terminal electrodes (i.e., to the first surface 21a of the current collector 21 of the positive terminal electrode 16 and to the second surface 21b of the current collector 21 of the negative terminal electrode 17) and to the first surface 21a and the second surface 21b of the current collector 21 of each bipolar electrode 14. The second sealing layer 32 is a polyolefin resin or a modified polyolefin resin and is composed of a resin material having electrolyte resistance such as acid-modified PE, acid-modified PP, polyethylene, or polypropylene. The second sealing layer 32 is formed, for example, of the same resin material as the first resin layer 41.

The spacer layer 33 is provided between two sealing layers 30, 30 adjacent in the lamination direction. An inner edge 33a of the spacer layer 33 is positioned in the internal space S formed between the current collectors 21, 21 adjacent in the lamination direction. An outer edge 33b of the spacer layer 33 may be at the same position as the outer edge 30b of the sealing layer 30 when viewed in the lamination direction. The spacer layer 33 may have a thickness (length in the lamination direction) greater than the thickness (length in the lamination direction) of the sealing layer 30, and may, for example, be 200 µm to 500 µm.

The spacer layer 33 is a polyolefin resin or a modified polyolefin resin and is composed of a resin material having electrolyte resistance such as acid-modified PE, acid-modified PP, polyethylene, or polypropylene. The spacer layer 33 has a higher crystallinity than the first resin layer 41, the second resin layer 43, and the second sealing layer 32. Thus, the moisture permeation of the sealing portion 13 can be suppressed.

In the present embodiment, the first resin layer 41, the second resin layer 43, and the second sealing layer 32 are formed of acid-modified PE or acid-modified PP. The gas barrier resin layer 42 is formed of an EVOH resin. The spacer layer 33 is formed of polyethylene or polypropylene.

The end surface welded portion 34 is formed by the outer edge portions of the plurality of sealing layers 30 and the outer edge portions of the plurality of spacer layers 33 being integrated with each other by welding outside the outer edges 21d of the current collectors 21 when viewed in the lamination direction. The end surface welded portion 34 is formed by the outer edge portions of the plurality of sealing layers 30 and the outer edge portions of the plurality of spacer layers 33 being integrated with each other by welding at least at an end surface R2a of the second region R2 when viewed in the lamination direction. The plurality of sealing layers 30 and the plurality of spacer layers 33 are welded to each other by the end surface welded portion 34 outside the outer edges 21d of the current collectors 21. The end surface welded portion 34 is formed by the end portions (outer edge portions) of the plurality of sealing layers 30 and the plurality of spacer layers 33 on an opposite side from the internal spaces S being welded to each other and integrated. In other words, the sealing layers 30 and the spacer layers 33 are not welded to each other and are only in contact with each other at portions other than the end surface welded portion 34.

The end surface welded portion 34 has a rectangular frame shape and surrounds the electrode laminate 12 when viewed in the lamination direction. The end surface welded portion 34 is formed outside the outer edges 21d of the current collectors 21 when viewed in the lamination direction. That is, the sealing layers 30 and the spacer layers 33 have overlapping portions with the current collectors 21 and extending portions extending outward beyond the outer edges 21d of the current collectors 21 when viewed in the lamination direction. The end surface welded portion 34 is provided in the extending portions.

The side surface of the end surface welded portion 34 on the opposite side from the internal spaces S extends along the lamination direction and forms an outer side surface of the sealing portion 13. In other words, the sealing portion 13 includes an inner side surface that faces the internal spaces S and the outer side surface on the opposite side from the inner side surface. The sealing portion 13 has four outer side surfaces. The end surface welded portion 34 has a thickness, that is, a distance (shortest distance) between the inner side surface and the outer side surface of the end surface welded portion 34, of, for example, 1 mm to 5 mm. The thickness of the end surface welded portion 34 may be 1 mm to 3 mm. The thickness of the end surface welded portion 34 is, for example, at least ten times the thickness of the sealing layer 30. The end surface welded portion 34 is formed, for example, by the outer edge portions of the sealing layers 30 and the outer edge portions of the spacer layers 33 being melted by a heating device such as an infrared heater. The thickness of the end surface welded portion 34 is greater than that of the first sealing layer 31 which is the outermost sealing layer, and thus, the end surface welded portion 34 is unlikely to serve as a pathway for gas or moisture permeation.

The outer edge welded portion 36 is provided to cover the outer edge 21d of the current collector 21. The outer edge welded portion 36 provided at the terminal electrode is formed by the adjacent first resin layer 41 and second sealing layer 32 being integrated with each other by welding so as to cover the outer edge 21d of the current collector 21 of the terminal electrode. The outer edge welded portion 36 provided at the bipolar electrode 14 is formed by the adjacent first resin layers 41, 41 being integrated with each other by welding so as to cover the outer edge 21d of the current collector 21 of the bipolar electrode 14. The outer edge welded portion 36 is disposed inside the end surface welded portion 34 spaced apart from the end surface welded portion 34 when viewed in the lamination direction.

The outer edge welded portion 36 is disposed outside the outer edge 21d when viewed in the lamination direction. The outer edge welded portion 36 may or may not be in contact with the outer edge 21d. The outer edge welded portion 36 has a rectangular frame shape so as to surround the electrode laminate 12 when viewed in the lamination direction.

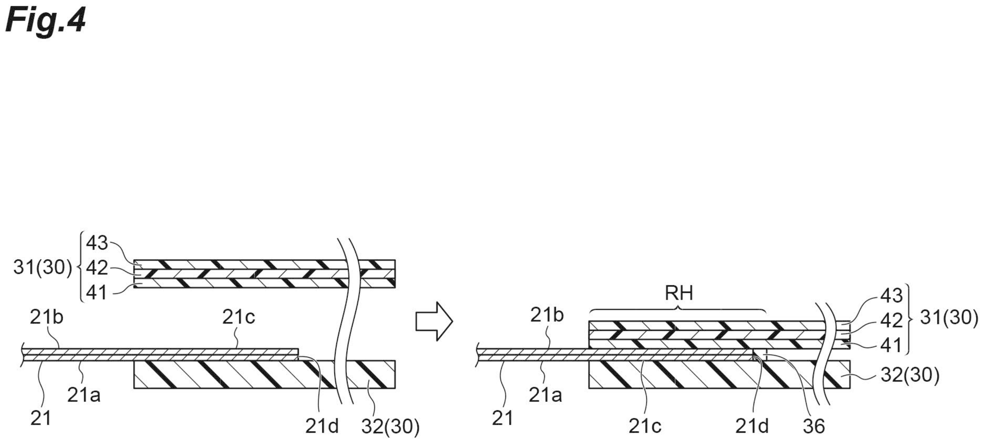

FIG. 4 is a cross-sectional view for describing a method for forming the outer edge welded portion. As illustrated in FIG. 4, a pair of the sealing layers 30 and the current collector 21 are disposed so as to sandwich the peripheral portion 21c of the current collector 21 by the pair of the sealing layers 30. Here, a case where the current collector 21 is disposed between the first resin layer 41 of the first sealing layer 31 and the second sealing layer 32 is exemplified. Subsequently, the pair of the sealing layers 30 is heated, for example, by a heating device such as an impulse sealer or an ultrasonic sealer to be adhered to the peripheral portion 21c of the current collector 21. In doing so, the first resin layer 41 and the second sealing layer 32 melt together and become integrated outside the outer edge 21d of the current collector 21, thereby forming the outer edge welded portion 36. The outer edge 21d of the current collector 21 can be covered by the outer edge welded portion 36.

Although not illustrated, the outer edge welded portion 36 is similarly formed in the case where the current collector 21 is disposed between two second sealing layers 32. In one example, a heating region R by the heating device is limited to the region of the sealing layers 30 that overlap with the current collector 21 and the vicinity thereof. Thus, the thickness of the outer edge welded portion 36 is limited, which makes it possible to suppress warping of the current collector 21.

A communication hole 35 that communicates with each of the plurality of internal spaces S is formed in the sealing portion 13 illustrated in FIGS. 1 to 3. In one example, the communication hole 35 is formed by partially cutting out the spacer layer 33 and extends through the spacer layer 33 and the end surface welded portion 34. The communication hole 35 has one opening in the internal space S and another opening on the outer side surface of the sealing portion 13. In the power storage module 11, a cell including one internal space S is formed between adjacent current collectors 21, 21. Here, one communication hole 35 is formed for each cell. The communication hole 35 can be used as an injection port for injecting the electrolyte solution into the internal space S. That is, an injection port (opening of the communication hole 35) is provided on the outer side surface of the sealing portion 13. In the rectangular power storage module 11 as viewed in the lamination direction, the side on which the communication hole 35 is provided is referred to as an injection port side.

The inner edge 33a of the spacer layer 33 on the injection port side is positioned inside the inner edge 30a of the sealing layer 30 (at the internal space S side) when viewed in the lamination direction. The inner edge 33a of the spacer layer 33 on the injection port side in the present embodiment is positioned inside the inner edge 30a by, for example, 1 mm or more and is exposed from the sealing layer 30 so as to face the internal space S. The inner edge 33a of the spacer layer 33 on the sides other than the injection port side may be positioned outside the inner edge 30a of the sealing layer 30 or may be positioned inside the inner edge 30a of the sealing layer 30 when viewed in the lamination direction.

The end portion 15a of the separator 15 described above is fixed to the sealing layer 30 adhered to the second surface 21b of the current collector 21 between the sealing layer 30 and the spacer layer 33. It is only required that the end portion 15a of the separator 15 is fixed in the vicinity of the inner edge 30a of the sealing layer 30 when viewed in the lamination direction. The end portion 15a may be partly adhered (welded) to the sealing layer 30, for example, by spot welding.

The sealing layer 30 is spaced apart from the positive active material layer 22 and the negative active material layer 23 when viewed in the lamination direction. The inner edge 30a is positioned outside the positive active material layer 22 and the negative active material layer 23 when viewed in the lamination direction. The sealing layer 30 adhered to the first surface 21a may overlap with the negative active material layer 23 as long as it is spaced apart from the positive active material layer 22 when viewed in the lamination direction.

As described above, the power storage module 11 includes the electrode laminate 12 and the resin sealing portion 13. The sealing portion 13 has the plurality of sealing layers 30 provided on the peripheral portions 21c of the current collectors 21, the spacer layers 33 provided between the sealing layers 30, 30 adjacent in the lamination direction, and the end surface welded portion 34 in which the outer edge portions of the plurality of sealing layers 30 and the outer edge portions of the spacer layers 33 are integrated with each other by welding. The sealing portion 13 seals the internal spaces S of the power storage module 11.

A gas having a small molecular diameter passes through the gaps between the molecular bonds of the resin to move back and forth through the sealing portion 13. In the sealing portion 13, for example, the thickness of the end surface welded portion 34 when viewed in the lamination direction is 1 mm to 5 mm, whereas the thickness in the lamination direction of the outermost sealing layer (first sealing layer 31) disposed at each end of the laminate is 100 µm to 200 µm, which is thin. Therefore, air may enter the internal space S or the electrolyte solution in the internal space S may leak out through the first sealing layer 31.

When producing the power storage module 11, an electrolyte solution is injected into the internal space S from the communication hole 35 at room temperature (20 to 25°C), and after temporary sealing, an activation process is performed. The power storage module 11 is then subjected to an aging process and sealed under reduced pressure. Finally, the entire power storage module 11 is packaged in an aluminum-resin laminate film, thereby suppressing gas permeation. However, if the power storage module 11 is increased in size, the first sealing layer 31 which becomes the pathway for gas permeation is also increased in size, and the amount of gas permeation occurring before the power storage module 11 is packaged may become non-negligible. In particular, since the aging process is performed at a high temperature and for a long duration, for example, 60°C for 80 hours, the amount of gas permeation is likely to increase.

In the power storage module 11, the first sealing layer 31 includes the first resin layer 41 adhered to the current collector 21, the gas barrier resin layer 42 provided on the first resin layer 41, and the second resin layer 43 provided on the gas barrier resin layer 42. The gas barrier resin layer 42 is welded to the first resin layer 41 and the second resin layer 43, and has a lower gas permeability than the first resin layer 41 and the second resin layer 43. The gas barrier resin layer 42 is capable of suppressing the gas permeation of the sealing portion 13. Thus, the deterioration in battery performance is suppressed.

In the first sealing layer 31, it is also conceivable to suppress the gas permeation by using a metal foil such as aluminum instead of the gas barrier resin layer 42. However, since metal has a high thermal conductivity, if a metal foil is included in the first sealing layer 31, heat may not be sufficiently transmitted to the resin portion when forming the end surface welded portion 34, and the resins may not be integrated with each other. In this case, the sealability of the sealing portion 13 is reduced. In contrast, since the gas barrier resin layer 42 is formed of a resin material and has a lower specific heat than a metal foil such as aluminum, defects in the formation of the end surface welded portion 34 are less likely to occur. Therefore, the reduction in the sealability of the sealing portion 13 can be suppressed. Additionally, since the gas barrier resin layer 42 has a larger number of surface functional groups contributing to the welding of the first resin layer 41 and the second resin layer 43 than does a metal foil such as aluminum, interlayer delamination is less likely to occur compared to when a metal foil is used.

The gas barrier resin layer 42 is formed of a resin material containing vinyl alcohol as a monomer. The resin material containing vinyl alcohol as a monomer is a material in which molecules are capable of aggregating compactly and which has high barrier properties due to the formation of hydrogen bonds between hydroxyl groups. The resin material containing vinyl alcohol as a monomer has a low gas permeability and is thus capable of reliably suppressing the permeation of gas.

The first resin layer 41 and the second resin layer 43 are formed of the same resin material. Using the same resin material facilitates the production of the first sealing layer 31. Since the first sealing layer 31 has the same structure even when reversed in the thickness direction, the first sealing layer 31 can be used without distinguishing between the front and back sides. This can further facilitate the production of the power storage module 11.

The second sealing layer 32 (third resin layer) adhered to the inner surface of the current collector 21 of each terminal electrode (i.e., to the first surface 21a of the current collector 21 of the positive terminal electrode 16 and to the second surface 21b of the current collector 21 of the negative terminal electrode 17) is formed of the same resin material as the first resin layer 41. Using the same resin material facilitates the production of the first sealing layer 31 and the second sealing layer 32.

The sealing portion 13 has the outer edge welded portion 36 in which the first resin layer 41 and the second sealing layer 32 are integrated with each other by welding so as to cover the outer edge 21d of the current collector 21. The outer edge welded portion 36 is capable of suppressing the delamination of the first resin layer 41 and the second sealing layer 32 from the current collector 21. The first resin layer 41 and the second sealing layer 32 are formed of the same resin material and are thus readily compatible with each other. Therefore, the outer edge welded portion 36 can be easily formed.

The outer edge welded portion 36 is disposed spaced apart from the end surface welded portion 34 when viewed in the lamination direction. The first sealing layer 31 and the second sealing layer 32 are not welded to each other between the outer edge welded portion 36 and the end surface welded portion 34. Since the first sealing layer 31 and the second sealing layer 32 have a portion not welded to each other, the warping of the current collector 21 can be suppressed.

### (Second Embodiment)

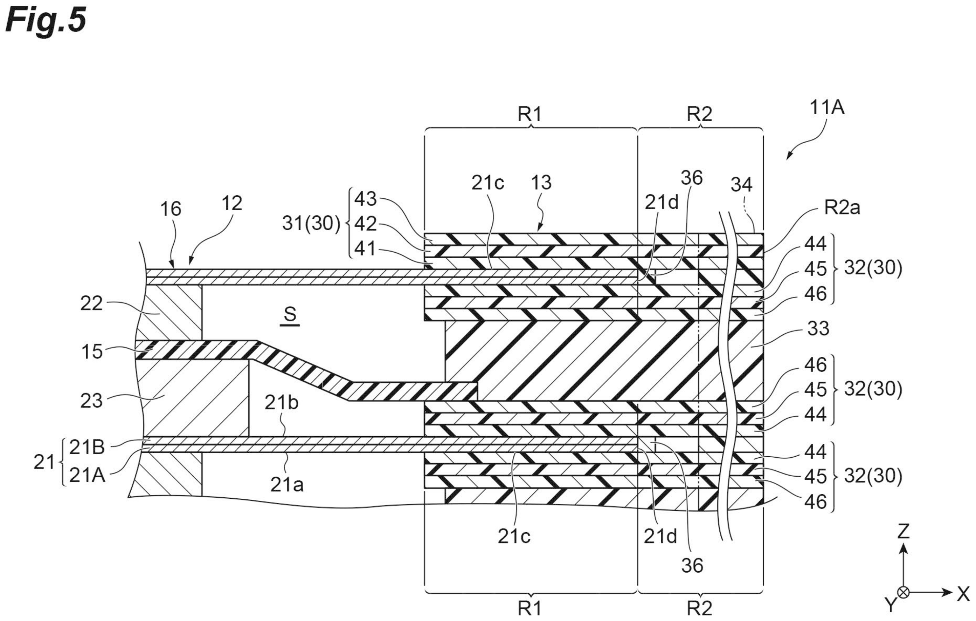

FIG. 5 is an enlarged cross-sectional view illustrating a portion of a power storage module according to a second embodiment. A power storage module 11A according to the second embodiment illustrated in FIG. 5 is different from the power storage module 11 in that the second sealing layer 32 has a multilayer structure. The second sealing layer 32 includes a third resin layer 44, a core resin layer 45, and a fourth resin layer 46. The third resin layer 44 is adhered to the inner surface of the current collector 21 of each of the pair of terminal electrodes (i.e., to the first surface 21a of the current collector 21 of the positive terminal electrode 16 and to the second surface 21b of the current collector 21 of the negative terminal electrode 17) and to the first surface 21a and the second surface 21b of the current collector 21 of each bipolar electrode 14. The core resin layer 45 is provided on the third resin layer 44. The fourth resin layer 46 is provided on the core resin layer 45 so as to sandwich the core resin layer 45 with the third resin layer 44. The fourth resin layer 46 is in contact with the spacer layer 33. The third resin layer 44 and the fourth resin layer 46 ensure adhesion between the second sealing layer 32 and the current collector 21, thereby suppressing delamination of the second sealing layer 32 from the current collector 21.

The third resin layer 44 and the fourth resin layer 46 are formed, for example, of the same resin material. The third resin layer 44 and the fourth resin layer 46 may be formed of the same resin material as the second sealing layer 32 of the power storage module 11. The third resin layer 44 and the fourth resin layer 46 are each a polyolefin resin or a modified polyolefin resin, and include a resin material having electrolyte resistance such as acid-modified PE, acid-modified PP, polyethylene, or polypropylene. The resin materials forming the third resin layer 44 and the fourth resin layer 46 may be different from each other. The first resin layer 41, the second resin layer 43, the third resin layer 44, and the fourth resin layer 46 may, for example, be formed of the same resin material.

The core resin layer 45 is welded to the third resin layer 44 and the fourth resin layer 46. The core resin layer 45 is a polyolefin resin or a modified polyolefin resin, and is composed of a resin material having electrolyte resistance such as acid-modified PE, acid-modified PP, polyethylene, or polypropylene. The core resin layer 45 has a higher crystallinity than the third resin layer 44 and the fourth resin layer 46. The core resin layer 45 is formed, for example, of the same material as the spacer layer 33.

In the present embodiment, the first resin layer 41, the second resin layer 43, the third resin layer 44, and the fourth resin layer 46 are formed of acid-modified PE or acid-modified PP. The gas barrier resin layer 42 is formed of an EVOH resin. The spacer layer 33 and the core resin layer 45 are formed of polyethylene or polypropylene.

Since in the power storage module 11A, the first sealing layer 31 also includes the gas barrier resin layer 42, the gas permeation of the sealing portion 13 can be suppressed similarly to the power storage module 11. In the power storage module 11A, the second sealing layer 32 includes the third resin layer 44 formed of the same resin material as the first resin layer 41 and adhered to the inner surface of each terminal electrode (i.e., to the first surface 21a of the current collector 21 of the positive terminal electrode 16 and to the second surface 21b of the current collector 21 of the negative terminal electrode 17). The outer edge welded portion 36 is formed by the first resin layer 41 of the first sealing layer 31 and the third resin layer 44 of the second sealing layer 32 being integrated by welding. The first resin layer 41 and the third resin layer 44 are formed of the same resin material and are thus readily compatible with each other. Therefore, the outer edge welded portion 36 can be easily formed. The second sealing layer 32 includes the core resin layer 45 that has a higher crystallinity than the first resin layer 41. The core resin layer 45 suppresses the moisture permeation and improves the gas barrier properties of the sealing portion 13 together with the spacer layer 33.

### (Third Embodiment)

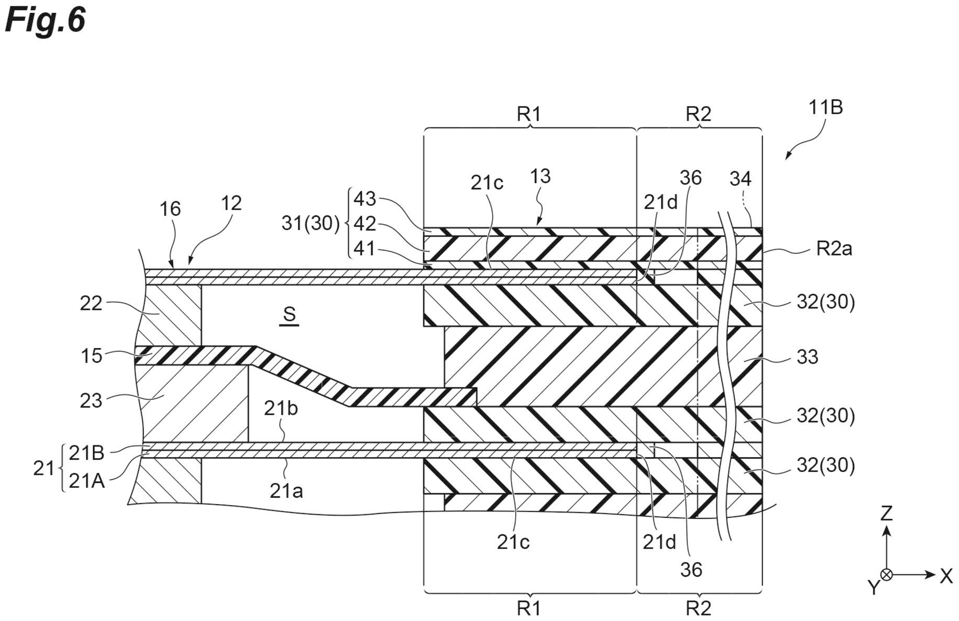

FIG. 6 is an enlarged cross-sectional view illustrating a portion of a power storage module according to a third embodiment. In a power storage module 11B according to the third embodiment illustrated in FIG. 6, the gas barrier resin layer 42 has a thickness greater than that of each of the first resin layer 41 and the second resin layer 43. The thickness of the gas barrier resin layer 42 may be 50% or more, 60% or more, or 70% or more of the total thickness of the sealing layer 30.

In the power storage module 11B, since the gas barrier resin layer 42 is thick, in an airtightness test between the cell and the outside performed during production, the leakage of the test gas injected into the internal space S via the communication hole 35 to the outside through the first sealing layer 31 is suppressed. As the test gas, in addition to helium, rare gas such as argon, inactive gas such as nitrogen, or hydrogen, ammonia, or halogen gases may be used. In the airtightness test, a detection sensor disposed outside the power storage module 11B detects the presence or absence of leakage of the test gas. If the detection sensor does not detect the test gas, it is determined that there is no problem in the airtightness between the cell and the outside.

As described above, in the sealing portion 13, the thickness of the first sealing layer 31 which is the outermost sealing layer is less than the thickness of the end surface welded portion 34, which may cause the test gas to leak out from the internal space S through the first sealing layer 31. In the power storage module 11B, since the gas barrier resin layer 42 suppresses the permeation of the test gas, a case where there is a problem with the airtightness between the cell and the outside, that is, a case where the test gas leaks out through the end surface welded portion 34 can be reliably detected.

EVOH resin, which is an example of the resin used for the gas barrier resin layer 42, has a higher resin strength than modified PE, which is an example of the resin used for the first resin layer 41 and the second resin layer 43. Thus, the pressure resistance strength of the power storage module 11B can be improved.

The gas barrier resin layer 42 is an EVOH resin having, for example, an ethylene content of 30% or less. An example of the gas barrier resin layer 42 is an EVOH resin having an ethylene content of 27%. Reducing the ethylene content makes it possible to more reliably reduce the permeation rate of the test gas during the airtightness test.

The first resin layer 41 and the second resin layer 43 have, for example, the same thickness. The thickness of the first resin layer 41 and the second resin layer 43 is, for example, 20 µm or more. This can ensure adhesion. An example of the thickness of the first resin layer 41 and the second resin layer 43 is 30 µm.

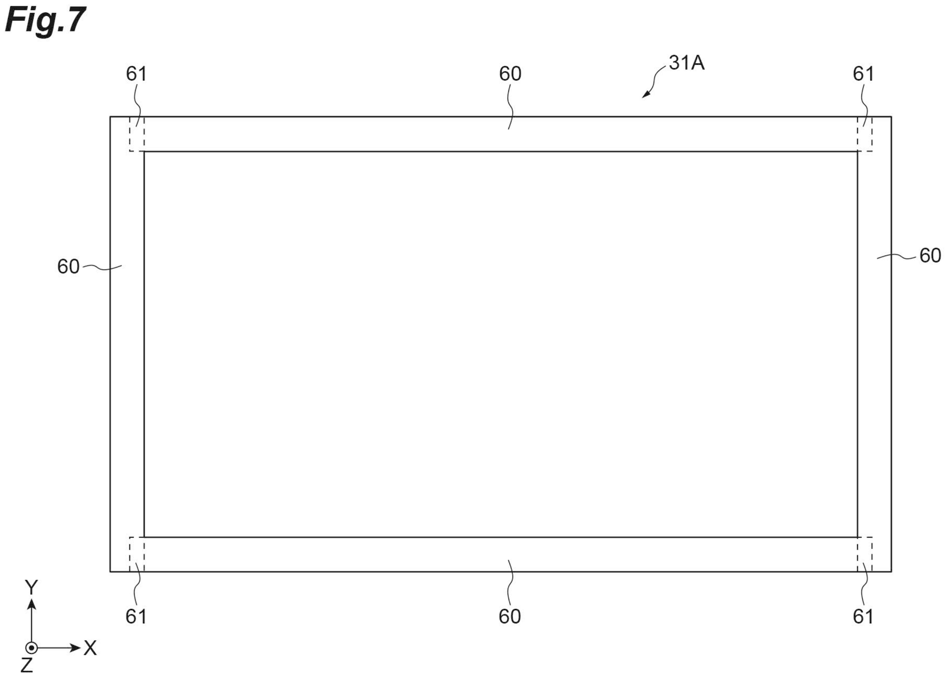

FIG. 7 is a plan view illustrating a first sealing layer according to a variation. As illustrated in FIG. 7, a first sealing layer 31A according to the variation is formed by joining a plurality of sheet materials 60. In the illustrated example, four rectangular sheet materials 60 are joined to form the first sealing layer 31A. The first sealing layer 31A includes a joint portion 61 where two sheet materials 60 overlap and are joined. At the joint portion 61, at least portions of the end portions of two sheet materials 60 are disposed overlapping each other. The first resin layer 41 and the second resin layer 43 (see FIG. 3) are formed of a polyolefin resin or a modified polyolefin resin at least at the joint portion 61. Thus, the welding of the sheet materials 60 is facilitated at the joint portion 61.

Although example embodiments of the present disclosure have been described in detail, the present disclosure is not limited to the above embodiments and variations.

For example, it is only required that at least one of the first sealing layers 31 includes the gas barrier resin layer 42, and the other first sealing layer 31 may have the same configuration as the second sealing layer 32. The above embodiments and variations may be combined as appropriate.

The embodiments of the present disclosure may be represented as follows.
[1] A power storage module including:
   a laminate in which a plurality of electrodes each having a current collector are laminated; and
   a sealing portion made of resin provided on a peripheral portion of each current collector to surround the laminate when viewed in a lamination direction of the plurality of electrodes,
   wherein the plurality of electrodes include a pair of terminal electrodes and a bipolar electrode disposed between the pair of terminal electrodes in the lamination direction,
   wherein in each of the pair of terminal electrodes, the current collector has an inner surface facing the bipolar electrode and an outer surface facing away from the inner surface,
   wherein the sealing portion includes:
      a plurality of sealing layers each including a first region welded to the peripheral portion of the current collector and a second region extending beyond an outer edge of the current collector; and
      a spacer layer provided between the sealing layers adjacent in the lamination direction,
   wherein the plurality of sealing layers include a first sealing layer provided on the outer surface,
   wherein the first sealing layer includes:
      a first resin layer welded to the outer surface;
      a gas barrier resin layer provided on the first resin layer and having a lower gas permeability than the first resin layer; and
      a second resin layer provided on the gas barrier resin layer and sandwiching the gas barrier resin layer with the first resin layer,
   wherein outer edge portions of the plurality of sealing layers including a pair of the first sealing layers and an outer edge portion of the spacer layer are integrated with each other by welding to form an end surface welded portion at least on an end surface of the second region when viewed in the lamination direction, and
   wherein the gas barrier resin layer is provided to overlap with at least the second region when viewed in the lamination direction.
[2] The power storage module according to [1],
   wherein the gas barrier resin layer is formed of a resin material including vinyl alcohol as a monomer.
[3] The power storage module according to [1] or [2],
   wherein the first sealing layer is formed by joining a plurality of sheet materials and includes a joint portion joined by the first resin layers and the second resin layers of two of the sheet materials overlapping and welding together, and
   wherein in the joint portion, the first resin layers and the second resin layers are formed of a polyolefin resin.
[4] The power storage module according to any one of [1] to [3],
   wherein the first resin layer is a polyolefin resin,
   wherein the plurality of sealing layers further include a second sealing layer provided on the inner surface,
   wherein the second sealing layer is formed of a polyolefin resin and includes a third resin layer welded to the inner surface, and
   wherein the sealing portion further includes an outer edge welded portion in which the first resin layer and the third resin layer are integrated with each other by welding to cover the outer edge of the current collector.
[5] The power storage module according to [4],
   wherein the outer edge welded portion is disposed spaced apart from the end surface welded portion when viewed in the lamination direction, and
   wherein the gas barrier resin layer is provided at least between the outer edge welded portion and the end surface welded portion when viewed in the lamination direction.
[6] The power storage module according to [4] or [5],
   wherein the second sealing layer further includes a core resin layer provided on the third resin layer and having a higher crystallinity than the third resin layer.

11, 11A, 11B...Power storage module, 12...Electrode laminate (laminate), 13...Sealing portion, 14...Bipolar electrode, 16...Positive terminal electrode, 17...Negative terminal electrode, 21...Current collector, 21a...First surface, 21b...Second surface, 21c...Peripheral portion, 21d...Outer edge, 22...Positive active material layer, 23...Negative active material layer, 30...Sealing layer, 31, 31A...First sealing layer, 32...Second sealing layer (third resin layer), 33...Spacer layer, 34...End surface welded portion, 36...Outer edge welded portion, 41...First resin layer, 42...Gas barrier resin layer, 43...Second resin layer, 44...Third resin layer, 45...Core resin layer, 46...Fourth resin layer, 60...Sheet material, 61...Joint portion, S...Internal space, R1...First region, R2...Second region, R2a...End surface.

## Claims

1. A power storage module comprising:
a laminate in which a plurality of electrodes each having a current collector are laminated; and
a sealing portion made of resin provided on a peripheral portion of each current collector to surround the laminate when viewed in a lamination direction of the plurality of electrodes,
wherein the plurality of electrodes include a pair of terminal electrodes and a bipolar electrode disposed between the pair of terminal electrodes in the lamination direction,
wherein in each of the pair of terminal electrodes, the current collector has an inner surface facing the bipolar electrode and an outer surface facing away from the inner surface,
wherein the sealing portion includes:
a plurality of sealing layers each including a first region welded to the peripheral portion of the current collector and a second region extending beyond an outer edge of the current collector; and
a spacer layer provided between the sealing layers adjacent in the lamination direction,
wherein the plurality of sealing layers include a first sealing layer provided on the outer surface,
wherein the first sealing layer includes:
a first resin layer welded to the outer surface;
a gas barrier resin layer provided on the first resin layer and having a lower gas permeability than the first resin layer; and
a second resin layer provided on the gas barrier resin layer and sandwiching the gas barrier resin layer with the first resin layer,
wherein outer edge portions of the plurality of sealing layers including a pair of the first sealing layers and an outer edge portion of the spacer layer are integrated with each other by welding to form an end surface welded portion at least on an end surface of the second region when viewed in the lamination direction, and
wherein the gas barrier resin layer is provided to overlap with at least the second region when viewed in the lamination direction.

2. The power storage module according to claim 1,
wherein the gas barrier resin layer is formed of a resin material including vinyl alcohol as a monomer.

3. The power storage module according to claim 1 or 2,
wherein the first sealing layer is formed by joining a plurality of sheet materials and includes a joint portion joined by the first resin layers and the second resin layers of two of the sheet materials overlapping and welding together, and
wherein in the joint portion, the first resin layers and the second resin layers are formed of a polyolefin resin.

4. The power storage module according to claim 1 or 2,
wherein the first resin layer is a polyolefin resin,
wherein the plurality of sealing layers further include a second sealing layer provided on the inner surface,
wherein the second sealing layer is formed of a polyolefin resin and includes a third resin layer welded to the inner surface, and
wherein the sealing portion further includes an outer edge welded portion in which the first resin layer and the third resin layer are integrated with each other by welding to cover the outer edge of the current collector.

5. The power storage module according to claim 4,
wherein the outer edge welded portion is disposed spaced apart from the end surface welded portion when viewed in the lamination direction, and
wherein the gas barrier resin layer is provided at least between the outer edge welded portion and the end surface welded portion when viewed in the lamination direction.

6. The power storage module according to claim 4,
wherein the second sealing layer further includes a core resin layer provided on the third resin layer and having a higher crystallinity than the third resin layer.
